# DEMANDE DE BREVET EUROPEEN

(11) **EP 3 725 469 A2**
(43) Date de publication de la demande: **21.10.2020**
(21) Numéro de dépôt: 20165792.1
(22) Date de dépôt: 26.03.2020
(51) Int. Cl.: B25J 5/00, B25J 19/02, B65G 1/04, G05D 1/02

(54) **ROBOT MOTORISÉ AMÉLIORÉ**

(30) Priorité: 29.03.2019 FR 1903396
(71) Demandeur: Norcan, 67500 Haguenau (FR)
(72) Inventeur: Wingling, Damien, 67350 MORSCHWILLER (FR)
(74) Mandataire: Hege, Frédéric

(57) **Abrégé**

La présente invention concerne un robot motorisé (1) apte à suivre un opérateur en mode suiveur comportant un corps (2), un moyen de déplacement (3) et un moyen de chargement (4) configuré pour supporter une charge (5), et un premier moyen de guidage basé sur l'émission et la détection d'un rayon lumineux, caractérisé en ce qu'il comporte un deuxième moyen de guidage, comportant au moins deux récepteurs (9) aptes à recevoir un signal radio transmis par un émetteur (10) placé sur ledit opérateur, la réception dudit signal par les récepteurs (9) permettant de localiser l'opérateur par rapport au robot (1).

La présente invention concerne également un procédé de guidage d'un robot motorisé selon l'invention.

## Description

La présente invention se situe dans le domaine des robots motorisés. Elle concerne plus particulièrement un robot motorisé amélioré comportant un mode suiveur d'un opérateur.

Les robots motorisés sont aujourd'hui couramment utilisés dans les domaines de la manutention et de la préparation de commandes. Ces robots permettent de réduire la pénibilité du travail des opérateurs en portant les charges à leur place. Les robots étant capables de porter des charges plus lourdes et/ou plus encombrantes que des êtres humains, ils réduisent les distances que les opérateurs ont à parcourir. Les robots permettent aux opérateurs, en libérant leurs mains, d'effectuer des tâches à valeur ajoutée par exemple la manipulation d'une tablette afin d'interagir avec un système de gestion des commandes, de gestion des stocks, etc. Enfin l'usage de robots permet de remplacer des équipements fixes et peu flexibles afin de gagner en souplesse et de faire des économies d'espace.

Le document WO2017153896 propose un robot autonome doté d'une fonction d'anticipation d'obstacle et permettant de guider un opérateur. Dans cette solution, les opérateurs doivent suivre les robots qui leur sont assignés, ce qui est peu flexible et induit du stress chez les opérateurs.

Le document KR101014531 décrit une méthode de suivi d'un humain par un robot motorisé. Le capteur est prévu pour détecter les jambes d'un individu, afin que le robot puisse le suivre dans ses déplacements. Cette solution permet d'améliorer la flexibilité et la facilité d'usage du robot par un opérateur. Toutefois le mode suiveur n'est pas suffisamment fiable. En effet, lorsque plusieurs opérateurs se trouvent à proximité d'un robot, le robot ne sait plus lequel suivre. De plus, après un virage pris rapidement par un opérateur, le robot peut perdre l'opérateur de vue, et ne pas réussir à le retrouver.

Un objet de la présente invention est de proposer un robot avec un mode suiveur plus fiable.

La présente invention a pour objet de répondre au moins en partie aux objets précités en proposant un robot motorisé combinant deux moyens de guidage, l'un par rayon lumineux et l'autre par signal radio, afin de réduire le risque de perdre de vue l'opérateur suivi. A cet effet, elle propose un robot motorisé apte à suivre un opérateur en mode suiveur comportant un corps, un moyen de déplacement et un moyen de chargement, et un premier moyen de guidage basé sur l'émission et la détection d'un rayon lumineux. Ce robot motorisé est particulier en ce qu'il comporte un deuxième moyen de guidage, comportant au moins deux récepteurs aptes à recevoir un signal radio transmis par un émetteur placé sur ledit opérateur, la réception dudit signal par les récepteurs permettant de localiser l'opérateur par rapport au robot.

Grâce à ces dispositions, lorsque le premier moyen de guidage n'est pas opérant, par exemple à cause d'un obstacle entre le robot et l'opérateur bloquant les rayons lumineux, le signal radio du deuxième moyen de guidage peut traverser cet obstacle et le robot peut continuer à détecter l'opérateur. Le mode suiveur est ainsi plus fiable.

Selon d'autres caractéristiques :
- ledit signal radio peut être de type Ultra wideband, ce qui est un mode de réalisation simple et efficace, les fréquences utilisées permettant une détection fiable,
- le signal radio peut comporter une identification du robot, ce qui permet à l'opérateur de s'associer à un robot particulier, et ainsi au robot de différencier l'opérateur qu'il doit suivre d'autres personnes dans son voisinage ; cela réduit donc le risque que le robot se mette à suivre quelqu'un d'autre que l'opérateur qu'il doit suivre,
- l'identification peut consister à utiliser une fréquence particulière, ce qui permet à l'opérateur de se régler sur cette fréquence dès qu'il souhaite interagir avec un robot en mode suiveur,
- les deux récepteurs peuvent être situés, par rapport à la direction du déplacement du robot, l'un à l'avant et à droite du robot, l'autre à l'arrière et à gauche du robot, ou l'un à l'avant et à gauche du robot, l'autre à l'arrière et à droite du robot, ce qui permet d'une part de maximiser la distance entre les récepteurs, et d'autre part de réduire les cas où les récepteurs et l'opérateur sont alignés, ces deux effets permettant de rendre la détermination de la position de l'opérateur par le robot plus précise,
- le premier moyen de guidage peut comporter un système lidar, ce qui est un mode de réalisation simple et efficace,
- ledit moyen de chargement peut comporter un convoyeur motorisé, un détecteur de centrage de la charge, et un moyen de transmission d'un ordre de marche au convoyeur, ledit détecteur de centrage comportant au moins deux capteurs de présence disposés chacun à une extrémité dudit convoyeur, ce qui permet au robot de détecter le fait qu'une charge est mal centrée et de la recentrer automatiquement, réduisant ainsi le risque de chutes des charges transportées par le robot.

La présente invention concerne également un procédé de guidage d'un robot motorisé selon l'invention en mode suiveur, caractérisé en ce que le robot détermine la localisation de l'opérateur en utilisant conjointement lesdits premier et deuxième moyens de guidage.

Grâce à ces dispositions, lorsque le premier moyen de guidage n'est pas opérant, par exemple à cause d'un obstacle entre le robot et l'opérateur bloquant les rayons lumineux, le signal radio du deuxième moyen de guidage peut traverser cet obstacle et le robot peut continuer à détecter l'opérateur. Le mode suiveur est ainsi plus fiable.

La présente invention sera mieux comprise à la lecture de la description détaillée qui fait suite, en référence aux figures annexées dans lesquelles :
[Fig. 1] est une vue schématique de côté d'un robot selon l'invention suivant un opérateur.
[Fig. 2] est une vue du dessus du robot de la fig.1 , avec une charge décentrée (fig. 2A) et avec une charge centrée (fig. 2B).
[Fig. 3] est une vue du dessus du moyen de chargement du robot de la fig.1.

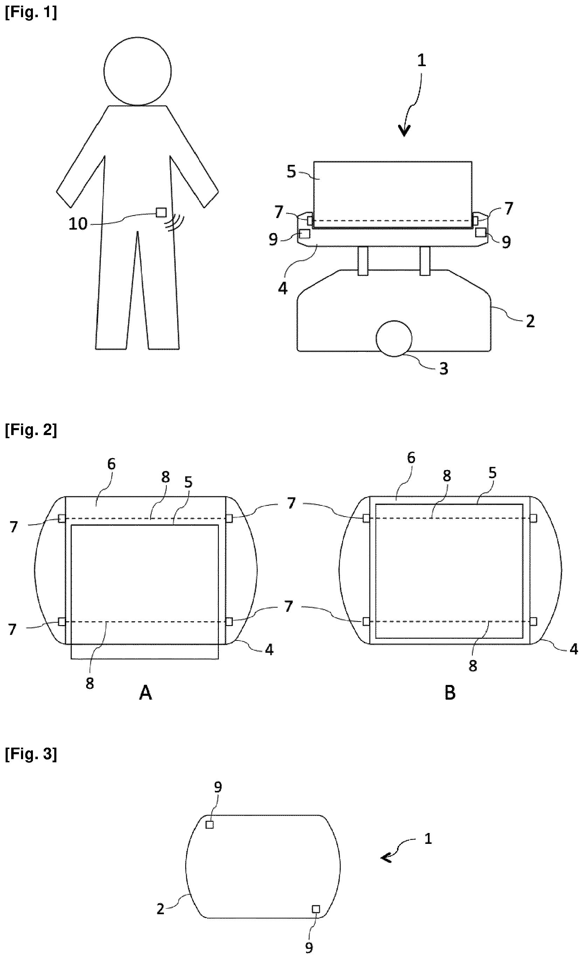

Le robot 1, tel qu'illustré en fig. 1, comporte un corps 2 monté sur un moyen de déplacement 3, par exemple des roues, et un moyen de chargement 4, par exemple un plateau configuré pour supporter une charge 5. Le robot 1 peut en option être complété par une remorque.

Le moyen de chargement 4 peut comporter un convoyeur motorisé 6. Il peut en outre comporter un détecteur de centrage de la charge 5, par exemple deux capteurs de présence 7 disposés chacun à une extrémité dudit convoyeur motorisé 6. Il peut enfin comporter un moyen de transmission d'un ordre de marche au convoyeur 6. Ainsi le moyen de chargement 4 peut assurer un recentrage dès que la charge 5, par exemple une caisse de la dimension du moyen de chargement, se déplace légèrement par rapport au moyen de chargement 4, par exemple à l'occasion d'une accélération ou d'un freinage, ou encore d'un virage.

Le détecteur de centrage peut par exemple comporter des pesons disposés sous plusieurs rouleaux, disposés et configurés pour détecter que des rouleaux d'une extrémité du convoyeur 6 sont plus chargés que des rouleaux de l'autre extrémité du convoyeur 6. On peut par exemple équiper uniquement les deux rouleaux d'extrémité de tels pesons, et comparer les poids observés pour chacun de ces deux rouleaux d'extrémité.

Selon un autre mode de réalisation préféré de l'invention, le détecteur de centrage peut comporter des capteurs de présence optique 7, qui peuvent être disposés chacun à une extrémité dudit convoyeur 6.

On peut ainsi détecter par exemple un décalage latéral d'une caisse 5 du fait d'une absence d'objet devant l'un des capteurs de présence 7 et engager l'opération de recentrage. Il faut donc que ces capteurs de présence 7 soient suffisamment proches de l'extrémité du convoyeur 6 pour que l'ordre de marche puisse être donné au convoyeur 6, que celui-ci se mette en route, et que le recentrage puisse avoir lieu sans occasionner dans l'intervalle une chute éventuelle de la caisse 5. Le mot « extrémité » doit être compris dans le cadre de la présente invention comme suffisamment proche de l'extrémité pour remplir cette fonction. On se mettra par exemple à moins de 10 cm de l'extrémité.

Comme illustré en fig. 2, les capteurs de présence 7 placés à cette position permettent de détecter un défaut de centrage de la caisse 5, puisqu'une non détection selon un axe 8 parallèle à un des côtés du plateau 4 (voir fig. 2A) peut être interprétée comme le fait que la caisse 5 s'est déplacée vers l'autre côté du plateau 4. Une telle non détection permet alors d'envoyer un ordre de marche au convoyeur 6, ce qui ramène la caisse 5 vers sa position centrée (voir fig. 2B).

Le robot 1 fonctionne par exemple au moyen d'une alimentation électrique, par exemple par une batterie.

Le robot 1 comporte un premier et un deuxième moyens de guidage qui ont chacun pour fonction de guider le robot 1 afin qu'il suive l'opérateur. La combinaison des premier et deuxième moyens de guidage rend le guidage de suivi de l'opérateur plus fiable que l'un quelconque des deux moyens de guidage à lui tout seul.

Dans la présente demande, le terme "moyen de guidage" ne désigne donc pas un moyen permettant d'éviter des obstacles. Il est toutefois possible, sans sortir du cadre de la présente invention, que les moyens de guidage soient également utilisés à cette fin.

Le robot 1 comporte un premier moyen de guidage qui comporte un mode suiveur, dans lequel il suit l'opérateur par exemple comme expliqué dans le document KR101014531. Le premier moyen de guidage comporte des capteurs de guidage permettant de détecter la position de l'opérateur, et de le suivre à chaque instant. Ainsi, lorsque l'opérateur a besoin d'un robot 1, il se place près du robot 1 et l'active en mode suiveur, par exemple au moyen d'une commande disposée sur le robot 1, ou au moyen d'une commande à distance, qui peut communiquer directement avec le robot 1, ou encore avec un système de gestion centralisé. Une fois activé, le robot 1 en mode suiveur suit l'opérateur tout au long de ses déplacements.

Le premier moyen de guidage peut comporter un émetteur d'un faisceau lumineux, combiné à un capteur de guidage permettant de détecter le retour dudit faisceau lumineux après réflexion par exemple sur les jambes d'un opérateur à suivre. Le faisceau lumineux peut être un faisceau de lumière, par exemple par le moyen d'un laser. On utilise souvent un système lidar qui utilise une lumière dans le domaine visible, ou encore dans les domaines ultra-violet ou infra-rouge proches du visible. Typiquement cela peut aller de longueurs d'onde de 250nm à 10 micromètres. L'utilisation de la lumière permet d'obtenir une bonne précision de détection, et permet au robot 1 de connaitre la position de l'opérateur avec suffisamment de précision.

Le robot 1 comporte un deuxième moyen de guidage comprenant deux récepteurs 9, aptes à recevoir un signal radio transmis par un émetteur 10 placé sur l'opérateur suivi par le robot 1. Le signal radio reçu par les récepteurs 9 permet d'évaluer le positionnement de l'opérateur par rapport au robot 1, par exemple par trilatération en mesurant le temps de propagation du signal radio pour atteindre chaque récepteur 9. La présence de deux récepteurs 9 est suffisante pour localiser l'opérateur dans un plan, et sera donc suffisante pour un certain nombre d'applications pour lesquelles les robots 1 évoluent exclusivement au sol et n'ont pas besoin de localiser l'opérateur en hauteur. Toutefois il n'est pas exclu de disposer plus de deux récepteurs 9 sur le robot 1 pour améliorer la localisation, ou encore pour pouvoir localiser un opérateur dans un espace à trois dimensions.

Comme illustré en fig. 3, les deux récepteurs 9 peuvent par exemple être situés selon une diagonale, c'est-à-dire, par rapport à la direction du déplacement du robot 1, l'un à l'avant et à droite du robot 1, l'autre à l'arrière et à gauche du robot 1, ou l'un à l'avant et à gauche du robot 1, l'autre à l'arrière et à droite du robot 1. Une telle disposition permet de maximiser la distance entre les deux récepteurs. Sur la fig. 3 les récepteurs 9 sont situés sur le moyen de chargement 4 du robot 1, mais ils peuvent se trouver n'importe où sur le robot 1 tant qu'ils peuvent remplir leur fonction, par exemple sur le corps 2.

En effet plus la distance entre les récepteurs 9 est grande, plus la localisation est précise. Une telle disposition en diagonale réduit le risque d'aligner les récepteurs 9 et l'opérateur, ce qui améliore encore la précision de la localisation. Par ailleurs, une telle disposition peut être symétrique, et identique quand le robot 1 change de sens de circulation, ce qui facilite sa programmation.

Le signal radio peut par exemple être un signal de haute fréquence, de préférence compris entre 0,1 et 100 GHz, par exemple de type Ultra wideband (UWB). Typiquement les fréquences utilisées peuvent se situer entre 3 et 10 GHz, par exemple 6,49 GHz.

Le signal radio peut traverser certains éléments, comme par exemple des cartons. Ainsi dans certains environnements, par exemple un entrepôt dans lequel sont rangés des articles placés dans des boîtes en carton, l'opérateur est presque toujours détectable par le robot 1. Un système de détection utilisant la lumière comme le lidar est inopérant si un élément opaque à la lumière se trouve entre le robot 1 et l'opérateur. Un robot uniquement guidé par un tel système, et qui se trouve dans une telle situation en est donc réduit à déterminer par calcul la position probable de l'opérateur, et il y a un risque significatif de perdre l'opérateur, surtout si celui-ci s'est mis à marcher un peu plus vite.

Afin que le deuxième moyen de guidage puisse fonctionner, la distance entre le robot 1 et l'opérateur du deuxième moyen de guidage doit par exemple être comprise entre 0,4 m et 60 m.

L'utilisation d'un signal radio permet au robot 1 de détecter la position de l'opérateur dans une telle situation à travers les cartons des étagères, du fait que les ondes radio les traversent plus facilement. Le robot 1 peut donc se rapprocher de l'opérateur, puis reprendre son guidage par le premier moyen de guidage.

Par ailleurs, si le premier système de guidage a perdu l'opérateur de vue, même si celui-ci a eu le temps de s'éloigner de plusieurs mètres, le deuxième système de guidage permet au robot 1 de savoir de manière certaine où se trouve l'opérateur à suivre.

Ainsi, la combinaison d'un deuxième système de guidage utilisant un signal radio avec un premier système de guidage permet d'améliorer le mode suiveur d'un robot 1. Par exemple lorsque l'opérateur prend un virage rapide à 90° à la fin d'une ligne d'étagères, il y a un risque que l'opérateur ne soit plus détectable par le premier système de guidage. Le deuxième système de guidage, utilisant un signal radio, est alors utile pour permettre au robot 1 de « retrouver » l'opérateur.

Dans un mode de réalisation préféré, le signal radio comporte une identification de l'opérateur. Ainsi lorsque plusieurs opérateurs sont présents dans le voisinage du robot 1, le robot 1 peut être programmé pour suivre un seul opérateur identifié, et ne risque pas de se tromper en suivant un autre opérateur.

Ceci est particulièrement pertinent lorsque deux opérateurs se rapprochent, puis s'éloignent à nouveau. Le premier système de guidage interprète habituellement un tel événement comme un vrai croisement, et considère que la trajectoire de « son » opérateur doit être proche d'une droite. Il risque alors de changer d'opérateur à suivre. Là encore l'identification par le système de guidage radio lui permet d'éviter une telle erreur.

L'identification de l'opérateur peut par exemple se faire par l'usage d'une fréquence particulière affectée à un opérateur donné. Une telle fréquence peut par exemple être réglée par l'opérateur à chaque fois qu'il entre en interaction avec un robot suiveur.

Le robot 1 selon l'invention peut combiner l'usage d'un système de détection utilisant la lumière, tel que le lidar, et l'usage d'un système de détection utilisant un signal radio, tel que les récepteurs 9 interagissant avec un émetteur 10. En effet le lidar est plus précis lorsque la détection de l'opérateur par le robot 1 n'est pas obstruée par un obstacle, alors que le signal radio permet de détecter l'opérateur à travers certains obstacles, et d'identifier un opérateur parmi plusieurs. On peut donc mettre en œuvre un procédé utilisant conjointement ces deux systèmes.

Le système de détection utilisant un signal radio peut en option être également utilisé pour permettre une communication par radio entre l'opérateur et le robot. Par exemple lorsque l'opérateur s'engage dans une allée, il se peut qu'il préfère que le robot ne le suive pas parce qu'il a l'intention de ne faire qu'une courte distance puis revenir avec un article. Grâce à une telle communication il peut alors donner l'ordre au robot de rester à l'entrée de l'allée et de l'attendre. Cela peut lui éviter d'avoir à contourner le robot à son retour.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Robot motorisé (1) apte à suivre un opérateur en mode suiveur comportant un corps (2), un moyen de déplacement (3) et un moyen de chargement (4) configuré pour supporter une charge (5), et un premier moyen de guidage basé sur l'émission et la détection d'un rayon lumineux, **caractérisé en ce qu'**il comporte un deuxième moyen de guidage, comportant au moins deux récepteurs (9) aptes à recevoir un signal radio transmis par un émetteur (10) placé sur ledit opérateur, la réception dudit signal par les récepteurs (9) permettant de localiser l'opérateur par rapport au robot (1).

2. Robot motorisé selon la revendication précédente, dans lequel ledit signal radio est de type Ultra wideband.

3. Robot motorisé selon l'une des revendications précédentes, dans lequel le signal radio comporte une identification du robot.

4. Robot motorisé selon la revendication précédente, dans lequel l'identification consiste à utiliser une fréquence particulière.

5. Robot motorisé (1) selon l'une des revendications précédentes, dans lequel les deux récepteurs (9) sont situés, par rapport à la direction du déplacement du robot (1), l'un à l'avant et à droite du robot (1), l'autre à l'arrière et à gauche du robot (1), ou l'un à l'avant et à gauche du robot (1), l'autre à l'arrière et à droite du robot (1).

6. Robot motorisé selon l'une des revendications précédentes, dans lequel le premier moyen de guidage comporte un système lidar.

7. Robot motorisé (1) selon l'une des revendications précédentes, dans lequel ledit moyen de chargement (4) comporte un convoyeur motorisé (6).

8. Robot motorisé (1) selon la revendication précédente, dans lequel ledit moyen de chargement (4) comporte en outre un détecteur de centrage de la charge (5), et un moyen de transmission d'un ordre de marche au convoyeur (6), ledit détecteur de centrage comportant au moins deux capteurs de présence (7) disposés chacun à une extrémité dudit convoyeur (6).

9. Procédé de guidage d'un robot motorisé selon l'une des revendications précédentes en mode suiveur, **caractérisé en ce que** le robot détermine la localisation de l'opérateur en utilisant conjointement lesdits premier et deuxième moyens de guidage.
